# EUROPEAN PATENT SPECIFICATION

(11) **EP 1 694 604 B1**
(45) Date of publication and mention of the grant of the patent: **11.07.2012**
(21) Application number: 04809052.6
(22) Date of filing: 14.12.2004
(51) Int. Cl.: C02F 1/461, C02F 1/467

(54) **ELECTROLYTIC CELL AND TREATMENT OF CONTAMINATED WATER**
ELEKTROLYSEZELLE UND BEHANDLUNG VON KONTAMINIERTEM WASSER
CELLULE D'ELECTROLYSE ET PURIFICATION DE L'EAU CONTAMINEE

(30) Priority: 18.12.2003 EP 03445146
(43) Date of publication of application: 30.08.2006
(73) Proprietor: RWO GmbH, 28307 Bremen (DE)
(72) Inventor: NYMAN, Lars, S-840 12 FRÄNSTA (SE); HERLITZ, Fredrik, S-852 39 SUNDSVALL (SE); ECHARDT, Jonas, S-43242 Varberg (SE); SHIMAMUNE, Takayuki, Dr. Shimamune Consulting, Tokyo 194-0022 (JP); HAKANSSON, Bo, Deceased (SE)
(74) Representative: Methling, Frank-Oliver
(86) International application number: PCT/SE2004/001871
(87) International publication number: WO 2005/058761

(56) References cited:
- EP-A- 1 340 841
- WO-A-02/26635
- WO-A-03/035556
- WO-A2-97/11908
- US-A- 3 933 606
- US-A1- 2002 158 018
- US-A1- 2002 185 382
- US-A1- 2003 226 766
- US-B1- 6 328 875

## Description

The present invention relates to a process of treating contaminated water comprising microorganisms, an electrolytic cell in which the process is carried out, and the use of the cell for treatment of contaminated waters derived from various applications and sources.

### Background of the invention

Treatment of waste water containing microorganisms has been performed for a fairly long period of time. However, treatment processes based on electrolysis have hitherto not been completely problem-free. Inefficient processes as well as expensive equipment or high energy consumption have previously prevented improved handling of microorganisms occurring in e.g. waste water, cooling water, ballast water, and recirculated washing water. US 5,419,824 discloses an electrolytic cell for destroying contaminants. However, this process is very expensive and inefficient for applications where large volumes of water are treated due to extensive pressure drop, low flow rates, and low current efficiency.

In WO02/26635, it has been further tried out embodiments for reducing contaminants and microorganisms in which alternating current is supplied to a cell. This has, however, not always been seen to be a successful way of performing the chemical reactions in the cell.

WO97/11908 discloses a process and device for treating water contaminated with microorganisms and harmful pollutants. A direct current is passed through the water between an anode and a cathode. A swirl in the water flow within the device is generated.

It has been further seen in the prior art that cleaning systems involving reduction of contaminants often have been provided with a reactor tank arranged to the pipings through which the medium to be cleaned passes. This configuration, however, often results in pressure drops and lower throughput of the medium to be cleaned. The retention time may also be prolonged which is not always satisfying, particularly if large volumes of contaminated water needs rapid treatment.

The present invention intends to provide an efficient process and a cell solving the problems of the prior art. A further object of the present invention is to provide an improved control of the hydrogen and chlorine formation. The invention is defined by the appended claims.

The present invention relates to an electrolytic cell comprising at least one electrode pair defining an electrolyser zone, said electrode pair comprising an anode and cathode, arranged substantially parallel without separator means in between, allowing for a high throughput of electrolyte across said anode and cathode, wherein said anode and cathode enable treatment of microorganisms in a water stream having a conductivity from 0.0001 to 100 S/m passing said electrode pair, said electrolytic cell further comprising means for imposing a voltage across said anode and cathode and means for supplying a direct current to said cell. The following anode and cathode reactions would be likely to occur within an electrode pair:
Anode Reactions
   a) 2Cl- = Cl₂ + 2e-
   b) H₂O = 1/2O₂ + 2H+ + 2e-
   c) 2H₂O = H₂O₂ + 2H+ + 2e-
   d) 3H₂O = O₃ + 6H+ + 6e-
   e) Oxidation of Organic materials
Cathode reactions
   a) 2H+ + 2e- = H₂
   b) 2H₂O + 2e- = H₂ + 2OH-
   c) H₂O + O₂ + 2e- = HO₂- + OH-
   d) Cl₂ + 2e- = 2Cl-
   e) Reduction of organic materials
Possible chemical reactions occurring between anode and cathode products formed from inter alia the above listed reaction formulae in between the anodes and cathodes of the electrode pairs include inter alia
   a) Cl₂ + 2OH- = ClO- + Cl- + H₂O
   b) Cl₂ + HO₂- = HCl + Cl- + O₂
   c) 3ClO- = ClO3- + 2Cl-
   d) H+ + HO₂- = H₂O₂
   e) Other reactions, e.g. formation of hydroxyl radicals as further described in "Degradation of Organic Pollutants by the Advanced Oxidation Processes", Chinese J. of Chem.Eng, 7(2) 110-115 (1999).

By the term "cross section area" is meant the area of the cell through which the electrolyte flows as it passes from the inlet to the outlet of the cell. The cross section area of the cell may vary along the flow path, but preferably, this area is constant. At the location of said at least one electrode pair, the anode and the cathode constitute a partly open area through which electrolyte can pass. The open cross section area is defined herein in as the area not blocked by the electrodes in percent of the total cross section area the cell has at said location.

By the term "electrode pair" is meant an anode and a cathode arranged together with a relatively small distance from each other, preferably a distance that is smaller than the distance to any other possible electrode pair or single electrode in the cell. The distance between the anode and the cathode in an electrode pair is from 0.2 to 10, preferably from 0.2 to 5, and most preferably from 0.2 to 3 mm. Preferably, the distance between adjacent electrode pairs is from 3 to 25, most preferably from 5 to 15 times the distance between the anode and the cathode in each electrode pair, i.e. from 0.6 to 250, most preferably from 1 to 150 mm.

In the elaboration of the above cell, It was found that separator means in an electrode pair was detrimental to the functioning of the whole cell, inter alia due to the fact that it may result In a considerable pressure drop since the throughput of the treated medium then is reduced, but also due to the fact that such a separator means may inhibit the desired reactions between the reactions products at the anode and the cathode to occur.

The means of supplying a direct current may be e.g. a conventional rectifier. It has been found that, in order to safeguard that the desired reactions occur within each electrode pair, the anode preferably is followed by a cathode on which the reaction products formed on the anode may react further such that the amount of microorganisms can successfully be kept at a minimal level. This process may not always be effected successfully in the case of alternating currents being supplied to the cell, since such a current changes the poles of the electrodes and the necessary reactions would not occur in time. If the reaction products on the anode are not reacted further to form hydroxyl radicals, the reaction products may otherwise decompose such that no, selected formation of hydroxyl radicals occurs, This is of course detrimental to the process since the hydroxyl radicals are essential for the treatment of the microorganisms.

The electrode pair is thus arranged such that a water stream entering the cell first encounters the anode and then the cathode such that products from the anode reactions can react at the cathode or rapidly mix with products from the cathode reactions to further increase the efficiency of the process and also reduce the formation of trihalomethanes (THM) or other toxic chlorinated organics in chloride containing water. This is particularly advantageous in the configuration of the electrode pair without any intermediate separator between anode and cathode. The reaction products from the anode reactions may thus be instantly mixed with the reaction products of the cathode which may react further at the cathode. Toxic reaction products of Cl₂ when electrolyzed in chloride-containing water systems may accordingly be further transformed to less toxic or non-toxic CIO or OH radicals or the like, and other reaction products may also be transformed to non-toxic compounds which may function as affective disinfectants which may reduce COD and BOD further such that substantially no formation of THM occurs from reaction between formed Cl₂ and organic compounds. The possible subsequent electrode pairs are preferably arranged In the same way as the first one. However, other arrangement may also be possible, e,g, wherein a cathode is arranged before an anode in the flow direction of the electrolyte.

According to one preferred embodiment, the electrode pair or pairs constituting the reaction zone or the cell is integrated in the piping system through which the water to be purified passes. The cell may then have the same diameter as the pipi ng through which the contaminated water is supplied. This results In a simpler and a more cost effective system that easily can be arranged and transported to the site where the purification is effected.

The term "substantially In parallel" in the context of the arrangement of the relative position of the anode and the cathode means that the electrodes may, even though this is not preferred, be angled to a certain extent from each other. The angle between the anode and the cathode in the electrode pair is thus not necessarily 0° as would be the case if they were arranged in parallel. Preferably, the angle between the anode and the cathode is from 0 to 45°, more preferably from 0 to 30°, and most preferably from 0 to 10°.

The electrodes, i.e. the anode and the cathode, have the shape of a mesh, e.g. an expanded metal mesh; a wire cloth, perforated plates or sheet metals, sintered metal fibres, sintered metal powder, or any other perforated configuration. The apertures may have any suitable shape, but preferably the apertures have the shape of a rhomb, square, rectangle, trapezium, circle or the like. The dimensions (e.g. the sides of a rhomb) of the apertures suitably range from 0.5 to 50, preferably from 0.5 to 15 mm. Each aperture preferably has an area from 0.01 to 2500, more preferably from 0.2 to 500, and most preferably from 1 to 100 mm². This cell configuration will provide for low pressure drop as the electrolyte flows through the cell.

Preferably, the cathode substrate is fabricated of nickel, titanium, or other suitable metal, or a conductive nonmetallic material; graphite fibres, graphitised doth, or a conductive metal oxide.

Preferably, the anode substrate is fabricated of titanium, niobium or other suitable metal, or a conductive nonmetallic material; e.g. p-doped silicon.

Preferred anode coatings include boron doped diamond (BDD), PbO₂ and SnO₂. Other suitable anode coatings are platinised titanium, platinum, activated carbon, graphite, as well as the coating materials mentioned in European patent application EP 1489200.

Preferred cathode coatings include boron doped diamond (BDD), activated carbon, graphite, as well as the coating materials mentioned In European patent application EP 1489200.

Preferably, the open cross section area of said at least one anode and cathode Is from 20 to 75, and most preferably from 25 to 60 % of the total cross section area. As the open cross section area Increases, the pressure drop is reduced in the cell since the electrolyte can flow through the cell more easily,

Preferably, the thickness of the respective electrodes is from 0,2 to 3, more preferably from 0.2 to 2, and most preferably from 0.2 to 1.5 mm.

Preferably, the electrodes are monopolar such that the current load and the cell voltage of each electrode pair can be adjusted individually. However, bipolar electrodes may In some arrangements be employed.

Preferably, the specific surface area of the anode and the cathode is from 1 to 1000, most preferably from 10 to 1000 m²/m² projected surface area.

The cathode suitably has a high hydrogen formation overvoltage, preferably higher than 300, and most preferably higher than 500 mV. Preferably, the anode has a high oxygen formation overvoltage, preferably higher than 400 mV, and most preferably higher than 700 mv.

The electrodes may be scratched, embossed, patterned or otherwise roughened to increase the local turbulence near the electrode pairs.

The number of electrode pairs will depend on the flow rate and the concentration of microorganisms to be treated. However, the cell preferably comprises from 1 to 10, more preferably from 1 to 7, and most preferably from 2 to 5 electrode pairs.

The electrode pair(s) is preferably mounted in a suitable housing or assembly which supports the electrodes.

Preferably, the cross section area of the cell is from 0.00003 to 5, preferably from 0.0001 to 2, and most preferably from 0.001 to 1 m². The Inlet and outlet suitably have the same dimensions and cross section areas as the electrolytic cell to minimise the pressure drop. However, other Inlet and outlet areas are also possible, e.g. a larger cross section area at the inlet than the cell cross section area to render the water stream more turbulent.

The invention also relates to a process of treating contaminated water containing microorganisms comprising feeding a contaminated water stream at a volumetric flow of 1 to 1000 m³/h through an electrolyser zone, said water stream having a conductivity from 0.0001 to 100 S/m, electrolysing said water stream in said electrolyser zone defined by at least one electrode pair enabling treatment of microorganisms, said at least one electrode pair comprising an anode and a cathode without separator means, said water stream being guided substantially perpendicularly through said at least one anode and cathode while imposing a voltage across said anode and cathode and supplying a direct current to said anode and cathode, withdrawing from the electrolyser zone a treated water stream.

The term "substantially perpendicularly" as used herein with regard to the flow direction through the electrode pair means that the water stream may flow perpendicularly towards the plane of the anode and cathode constituting the electrode pair, I.e. at a right angle or 90° to said plane but also at a deviated angle up to 60° from said "right angle" flow.

Preferably, the volumetric flow of the water stream is from about 1 to 750, more preferably from 5 to 500, and most preferably from 10 to 500 m³/h. The linear flow rate suitably is from 0.1 to 10, preferably from 0.2 to 8, and most preferably from 0.2 to 5 m/s. It has been found that the volumetric flow and its corresponding linear flow rate in the range of the present invention provides for an increased current efficiency, whereby less current is needed for treating the microorganisms.

Preferably, the linear flow rate of the water stream entering the cell is so high that turbulence is easily achieved when reaching the first electrode. An increased turbulence results in increased mass transfer which in turn yields a more efficient treatment of the microorganisms. Preferably, the Reynold's number In the cell is higher than 2000, and most preferably higher than 5000, However, Reynold's number is preferably lower than 100000.

Turbulence and thereby also mass transfer may be Increased by increasing the flow of water.

The electrolysis taking place In the cell results In production of hydroxyl radicals and hydrogen peroxide which can kill microorganisms in order to prevent biofouling and other unwanted effects of microorganisms. The cell can also be useful in reducing COD in contaminated waters.

The hydroxyl radicals can be generated directly on the anode surface by oxidation of water on a suitable anode as defined herein. The hydroxyl radicals and other types of radicals may also be formed due to decomposition of oxidised or oxygen rich compounds formed at the anode surface, e.g. ozone, hydrogen peroxide, and oxygen, or by reduction of these compounds at the surface of the cathode. Hydroxyl radicals may also be formed by reaction of said oxidised or oxygen rich compounds in the electrolyte. Hydrogen peroxide can also be produced at the cathode and add a long term effect to the water treatment.

The concentration of hydroxyl free radicals decreases rapidly with the distance from the surface of the anode, because the hydroxyl free radicals react readily. Therefore, the reaction of microorganisms dissolved in the water with hydroxyl free radicals produced at the surface of the electrodes take place very close to the surface thereof. Increased surface area of the anode and turbulent water flow at the surface of the anode Increase the rate of mass transfer.

Occasionally, it may be advantageous or even necessary to adjust the pH and/or the electrical conductivity of the water to be treated.

The term "microorganism" includes any organism of microscopic size, such as a plankton, bacterium, protozoan, or virus.

According to a preferred embodiment, the cell can occasionally be operated at a constant or at a pulsed current load to further improve the treatment of microorganisms, The pulsed load can be of any suitable kind, e.g. triangular, sinusoidal or stepwise, and have a variation in time. Preferably, the average current density is from 10 to 5000, more preferably from 10 to 1000, and most preferably from 25 to 750 A/m².

According to another preferred embodiment, the cell can be operated with reversed load to remove scaling deposits. The reversed load can be of the same magnitude as the normal load described herein and the time and frequency of the reversed load can vary.

These measures allow for continuous operation of the cell. The cell may be operated by passing the flow either in single pass through the cell or by recirculating a part of the flow or the entire flow. Even though single pass operation is preferred, it may be needed to recirculate the flow through the cell if the microorganism concentration is still high or the number of electrode pairs is not sufficient for only single pass operation. However, the process may also be performed as a semicontinuous or batchwise process,

It has further been found that this process can be operated in such a way that substantially no chlorine is formed. A measuring and control system, as e.g. the DULCOMETER® instrumentation available from Prominent Dosiertechnik GmbH, is suitably connected to the cell in order to monitor the operation thereof, including the pH and residual chlorine concentration.

The invention also relates to the use of the electrochemical cell as disclosed herein for treatment of contaminated water containing microorganisms, particularly ballast water, waste water, cooling water, and recirculated washing water. The cell can preferably also be used to treat contaminated water in swimming pools. If very large volumes of contaminated water need to be treated, e.g. cooling water or ballast water where the volumetric flow may exceed 10000 or even 100000 m³/h, several electrolytic cells as described herein may of course be arranged in parallel to handle such large flows.

The total number of microorganisms will of course vary depending on the source from which the water is taken. However, the number of microorganisms (bacteria) In sea water may be from 100 to 1000000 /cm³.

### Brief description of the drawings

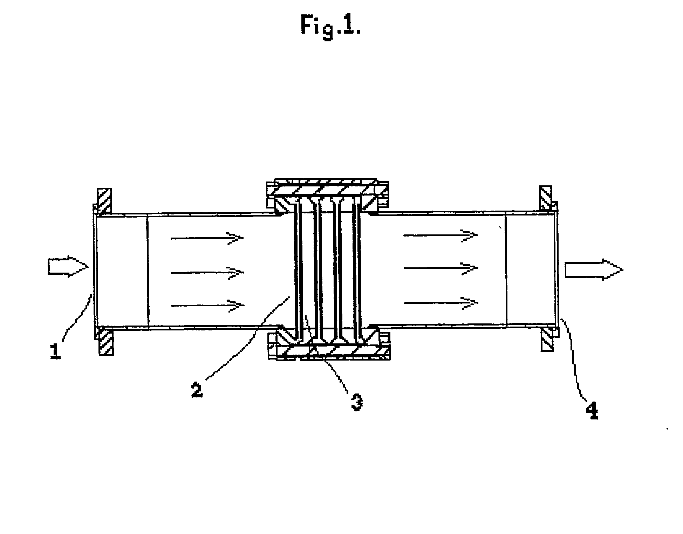

Fig.1 shows one cell arrangement of the invention.

### Description of the embodiment

Fig.1 shows an electrolytic cell suitable for treating contaminated water comprising microorganisms. The cell comprises an Inlet at point 1 through which a water stream comprising microorganisms passes in the direction of the arrows. The entering flow may be pumped to the cell or be pressurised by other means to make it enter the cell. An analogue and a digital flow meter may be provided (not shown) before the cell Inlet. The stream passes electrode pairs, each of which comprises an anode 2 and a cathode 3. The electrodes are made up of a mesh structure. As can be seen, four such electrode pairs arranged in parallel are shown in the cell all of which are arranged perpendicularly to the flow direction. The electrode pairs are also arranged over the whole cross section area of the cell. The stream passes through the electrode pairs and exits the cell at an outlet at point 4. The stream leaving the cell may be recirculated to the inlet at point 1 if it is not considered sufficiently decontaminated.

The following examples will further illustrate how the described invention may be performed.

### Example 1

Surface sea water containing plankton, coliform, and heterotrophic bacteria having a conductivity of 5 S/m was pumped into a tank of 800 litres and at the same time filtered through a cotton cloth and a 20 µm filter. Reference organisms of Tetraselmis and Isochrysis (both flagellates) were added together with a non-patogenic colony of the coliform E-choli bacteria. Control samples were taken.

Both the anodes and cathodes used were expanded niobium plates coated with conductive boron-doped diamond (BDD). The electrochemical cell comprised six of these BDD electrodes arranged for crossflow passage of the natural sea water in a titanium tube having an inner diameter of 70 mm. The anodes and cathodes were arranged in pairs with a small space of 4 mm between anode and cathode of the same pair and a distance of 41 mm between adjacent pairs.

The water treated In the electrochemical cell was fed through the cell at a flowrate of 10m³/h (175 l/min) and a current density of 670 A/m² was applied. The current was 11 A and the power was 126 W, This treatment resulted in a 100% killing of both kinds of plankton reference organisms, 100% reduction of CFU (Colony Forming Units) for coliform bacteria (natural + added E-choli) and a 99.96% reduction of CFU for natural occurring heterotrophic bacteria. The plankton analysis was made by light microscopy and bacteria were cultivated with certified standard methods at a laboratory. No THM formation occurred.

### Example 2

Natural surface sea water (from the west coast of Sweden) was prefiltered using a net and pumped into a tank of 800 litres. Control samples were taken. The electrodes and the cell were the same as in example 1. The water was run at the same flow rate and current density, current and power were as in example 1. The treatment resulted In 84% killing of natural occurring zoo planktons and a 93% killing of naturally occurring phytoplanktons. Analysis was made by light microscopy. No THM formation occurred.

### Example 3 (reference)

An electrolytic cell as used in Example 1 but with a porous separator in between the anode and the cathode was prepared. 0.5 mm thick woven mesh with 30% opening made of polypropylene was used as the separator. The water to be treated was flown from the cathode to anode. The electrolysis examination was performed under same conditions as In example 1 but the flow rate could not attaln a flow rate of 10m³/h but was only up to 3m³/h. Same electric current as example 1 was used. Several ppm of THM (tri-halo-methane) was shown to be formed in the sea water.

## Claims

1. Process of treating contaminated water containing microorganisms using an electrolytic cell comprising feeding a contaminated water stream at a volumetric flow of 1 to 1000 m³/h through an electrolyser zone, said water stream having a conductivity from 0.0001 to 100 S/m, electrolysing said water stream in said electrolyser zone defined by at least one electrode pair, said at least one electrode pair comprising an anode (2) and a cathode (3) without separator means and wherein the distance between the anode (2) and the cathode (3) in the electrode pair is from 0.2 to 10 mm, said water stream being guided substantially perpendicularly at a right angle or at a deviated angle up to 60° from said right angle flow through said at least one anode (2) and cathode (3) while imposing a voltage across said anode (2) and cathode (3) and supplying a direct current to said anode (2) and cathode (3), wherein the flow of the water stream is turbulent, producing hydroxyl radicals on the anode surface by oxidation of water and wherein the electrode pair is thus arranged that a water stream entering the cell first encounters the anode (2) and then the cathode (3) such that products from the anode reactions can react at the cathode or rapidly mix with products from the cathode reactions and withdrawing from the electrolyser zone a treated water stream.

2. Process according to claim 1, wherein the volumetric flow is from 1 to 750 m³/h, particularly from 5 to 500 m³/h, particularly from 10 to 500 m³/h.

3. Process according to claim 1 or 2, wherein the Reynold's number in the cell is higher than 2000, particularly higher than 5000.

4. Process according to any of claims 1 - 3, wherein the Reynold's number in the cell is lower than 100000.

5. Process according to any of claims 1 - 4, wherein the average current density is from 10 to 5000 A/m², particularly from 10 to 1000 A/m², particularly from 25 to 750 A/m².

6. Process according to any of claims 1 - 5, wherein the cathode has a hydrogen formation overvoltage higher than 300 mV, particularly higher than 500 mV.

7. Process according to any of claims 1 - 6, wherein the anode has a oxygen formation overvoltage higher than 400 mV, particularly higher than 700 mV.

8. Process according to any of claims 1 - 7, wherein scaling deposits are removed by operation with reversed load.

9. Electrolytic cell comprising an inlet (1) through which a water stream passes, comprising at least one electrode pair defining an electrolyser zone, said electrode pair comprising an anode (2) and cathode (3), arranged substantially parallelly without separator means in between, wherein the distance between the anode (2) and the cathode (3) in the electrode pair is from 0.2 to 10 mm and where the angle between the anode (2) and the cathode (3) is from 0° to 45°, allowing for a high throughput of electrolyte across said anode (2) and cathode (3), arranged such that said entering water stream flows subtantially perpendicularly at a right angle or at a deviated angle up to 60° from said right angle flow through the electrode pair to enable treatment of a water stream containing microorganisms having a conductivity from 0.0001 to 100 S/m passing said electrode pair, said anode (2) and cathode (3) have the shape of a mesh, said electrode pair/s is/are arranged over the whole cross section area of the cell, said electrolytic cell further comprising means for imposing a voltage across said anode (2) and cathode (3) and means for supplying a direct current to said cell and wherein the electrode pair is thus arranged that a water stream entering the cell first encounters the anode (2) and then the cathode (3), said cell further comprising an outlet (4).

10. Cell according to claim 9, wherein the angle between the anode (2) and the cathode (3) is from 0° to 30°, particularly from 0° to 10°.

11. Cell according to claim 9 or 10, wherein the open cross section area of the anode (2) and the cathode (3) is from 20 to 75 % of the total cross section area, particularly from 25 to 60%.

12. Cell according to any of claims 9 - 11, wherein the anode (2) and cathode (3) comprise apertures having an area from 0.01 to 2500 mm².

13. Cell according to any of claims 8 - 12, wherein the cell comprises monopolar electrodes.

14. Cell according to any of claims 9 - 13, wherein the distance between the anode (2) and the cathode (3) in the electrode pair is from 0.2 to 5 mm, particularly from 0.2 to 3 mm.

15. Cell according to any of claims 9 - 14, wherein the distance between two adjacent electrode pairs is from 3 to 25 times the distance between the anode (2) and the cathode (3) in each electrode pair, particularly from 5 to 15 times the distance between the anode (2) and the cathode (3) in each electrode pair, particularly from 0.6 to 250 mm, particularly from 1 to 150 mm.

16. Cell according to any of claims 9 - 15, wherein said cell comprises 1 to 10 number of electrode pairs, particularly 1 to 7, particularly 2 to 5.

17. Use of the electrolytic cell according to any of claims 9 - 16 for treating contaminated water containing microorganisms.

## Patentansprüche

1. Verfahren zur Behandlung von verunreinigtem, Mikroorganismen enthaltendem Wasser unter Verwendung einer elektrolytischen Zelle, umfassend das Zuführen eines verunreinigten Wasserstromes bei einem Volumenstrom von 1 bis 1000 m³/h durch einen Elektrolyseurbereich, wobei der Wasserstrom eine Leitfähigkeit von 0,0001 bis 100 S/m aufweist, das Elektrolysieren des Wasserstromes im Elektrolyseurbereich, der von wenigstens einem Elektrodenpaar definiert wird, wobei das wenigstens eine Elektrodenpaar eine Anode (2) und eine Kathode (3) ohne Trennmittel umfasst und wobei der Abstand zwischen der Anode (2) und der Kathode (3) im Elektrodenpaar von 0,2 bis 10 mm beträgt, wobei der Wasserstrom im Wesentlichen senkrecht in einem rechten Winkel oder in einem um bis zu 60° vom rechten Winkel abweichendem Winkel durch die wenigstens eine Anode (2) und Kathode (3) strömt, während eine Spannung über die Anode (2) und Kathode (3) angelegt wird und die Anode (2) und Kathode (3) mit Gleichstrom versorgt werden, wobei die Strömung des Wasserstromes turbulent ist, wobei Hydroxyl-Radikale auf der Anodenoberfläche durch Oxidation von Wasser erzeugt werden, und wobei das Elektrodenpaar so angeordnet ist, dass ein in die Zelle eintretender Wasserstrom zuerst auf die Anode (2) und dann auf die Kathode (3) trifft, so dass Produkte aus den Anodenreaktionen an der Kathode reagieren oder sich rasch mit Produkten aus den Kathodenreaktionen mischen können und ein behandelter Wasserstrom aus dem Elektrolyseurbereich austreten kann.

2. Verfahren nach Anspruch 1, wobei der Volumenstrom von 1 bis 750 m³/h, insbesondere von 5 bis 500 m³/h, insbesondere von 10 bis 500 m³/h beträgt.

3. Verfahren nach Anspruch 1 oder 2, wobei die Reynolds-Zahl in der Zelle höher als 2000, insbesondere höher als 5000 ist.

4. Verfahren nach einem der Ansprüche 1 bis 3, wobei die Reynolds-Zahl in der Zelle niedriger als 100000 ist.

5. Verfahren nach einem der Ansprüche 1 bis 4, wobei die durchschnittliche Stromdichte von 10 bis 5000 A/m², insbesondere von 10 bis 1000 A/m², insbesondere von 25 bis 750 A/m² beträgt.

6. Verfahren nach einem der Ansprüche 1 bis 5, wobei die Kathode eine Überspannung bei der Wasserstoffbildung aufweist, die höher als 300 mV, insbesondere höher als 500 mV ist.

7. Verfahren nach einem der Ansprüche 1 bis 6, wobei die Anode eine Überspannung bei der Sauerstoffbildung aufweist, die höher als 400 mV, insbesondere höher als 700 mV ist.

8. Verfahren nach einem der Ansprüche 1 bis 7, wobei Zunderablagerungen durch einen Vorgang mit umgekehrter Ladung beseitigt werden.

9. Elektrolytische Zelle, umfassend einen Einlass (1), durch den ein Wasserstrom hindurch läuft, umfassend wenigstens ein Elektrodenpaar, das einen Elektrolyseurbereich definiert, wobei das Elektrodenpaar eine Anode (2) und eine Kathode (3) umfasst, die im Wesentlichen parallel ohne dazwischen liegende Trennmittel angeordnet sind, wobei der Abstand zwischen der Anode (2) und der Kathode (3) im Elektrodenpaar von 0,2 bis 10 mm beträgt und wo der Winkel zwischen der Anode (2) und der Kathode (3) von 0° bis 45° beträgt, wodurch ein hoher Elektrolytdurchfluss über die Anode (2) und Kathode (3) ermöglicht wird, so angeordnet, dass der eintretende Wasserstrom im Wesentlichen senkrecht in einem rechten Winkel oder in einem um bis zu 60° vom rechten Winkel abweichendem Winkel durch das Elektrodenpaar strömt, um die Behandlung eines Mikroorganismen enthaltenden Wasserstromes mit einer Leitfähigkeit von 0,0001 bis 100 S/m, der durch das Elektrodenpaar hindurch läuft, zu ermöglichen, wobei die Anode (2) und die Kathode (3) die Form eines Gitters aufweisen, wobei das/die Elektrodenpaar/e über den gesamten Querschnittsbereich der Zelle angeordnet ist/sind, wobei die elektrolytische Zelle ferner Mittel zum Anlegen einer Spannung über die Anode (2) und Kathode (3) und Mittel zum Versorgen der Zelle mit Gleichstrom umfasst, und wobei das Elektrodenpaar so angeordnet ist, dass ein in die Zelle eintretender Wasserstrom zuerst auf die Anode (2) und dann auf die Kathode (3) trifft, wobei die Zelle ferner einen Auslass (4) umfasst.

10. Zelle nach Anspruch 9, wobei der Winkel zwischen der Anode (2) und der Kathode (3) von 0° bis 30°, insbesondere von 0° bis 10° beträgt.

11. Zelle nach Anspruch 9 oder 10, wobei der offene Querschnittsbereich der Anode (2) und der Kathode (3) 20 bis 75 % des gesamten Querschnittsbereiches, insbesondere 25 bis 60 % ausmacht.

12. Zelle nach einem der Ansprüche 9 bis 11, wobei die Anode (2) und Kathode (3) Öffnungen mit einer Fläche von 0,01 bis 2500 mm² umfassen.

13. Zelle nach einem der Ansprüche 9 bis 12, wobei die Zelle monopolare Elektroden umfasst.

14. Zelle nach einem der Ansprüche 9 bis 13, wobei der Abstand zwischen der Anode (2) und der Kathode (3) im Elektrodenpaar von 0,2 bis 5 mm, insbesondere von 0,2 bis 3 mm beträgt.

15. Zelle nach einem der Ansprüche 9 bis 14, wobei der Abstand zwischen zwei nebeneinander liegenden Elektrodenpaaren 3 bis 25 Mal so groß ist wie der Abstand zwischen der Anode (2) und der Kathode (3) in jedem Elektrodenpaar, insbesondere 5 bis 15 Mal so groß ist wie der Abstand zwischen der Anode (2) und der Kathode (3) in jedem Elektrodenpaar, insbesondere von 0,6 bis 250 mm, insbesondere von 1 bis 150 mm.

16. Zelle nach einem der Ansprüche 9 bis 15, wobei die Zelle eine Anzahl von 1 bis 10 Elektrodenpaaren, insbesondere von 1 bis 7, insbesondere von 2 bis 5 umfasst.

17. Verwendung der elektrolytischen Zelle nach einem der Ansprüche 9 bis 16 zur Behandlung von verunreinigtem, Mikroorganismen enthaltendem Wasser.

## Revendications

1. Procédé pour traiter de l'eau contaminée contenant des micro-organismes en utilisant une cellule électrolytique, comprenant les étapes consistant à acheminer un courant d'eau contaminée à débit volumique de 1 à 1000 m³/h à travers une zone d'électrolyse, ledit courant d'eau ayant une conductivité de 0,0001 à 100 S/m, électrolyser ledit courant d'eau dans ladite zone d'électrolyse définie par au moins une paire d'électrodes, ladite au moins une paire d'électrodes comprenant une anode (2) et une cathode (3) sans moyen séparateur et dans lequel la distance entre l'anode (2) et la cathode (3) de la paire d'électrodes est de 0,2 à 10 mm, ledit courant d'eau étant guidé de manière sensiblement perpendiculaire, à angle droit ou selon un angle dévié jusqu'à 60° par rapport audit écoulement à angle droit, à travers lesdites au moins une anode (2) et une cathode (3) tout en imposant une tension aux bornes desdites anode (2) et cathode (3) et en appliquant un courant continu auxdites anode (2) et cathode (3), dans lequel l'écoulement du courant d'eau est turbulent, produisant des radicaux hydroxyle sur la surface de l'anode par oxydation de l'eau et dans lequel la paire d'électrodes est donc aménagée de sorte qu'un courant d'eau pénétrant dans_la cellule rencontre d'abord l'anode (2), puis la cathode (3), de sorte que les produits issus des réactions anodiques puissent réagir à la cathode ou se mélanger rapidement aux produits issus des réactions cathodiques, et extraire de la zone d'électrolyse un courant d'eau traitée.

2. Procédé selon la revendication 1, dans lequel le débit volumique est de 1 à 750 m³/h, en particulier de 5 à 500 m³/h, mieux encore de 10 à 500 m³/h.

3. Procédé selon la revendication 1 ou 2, dans lequel le nombre de Reynolds dans la cellule est supérieur à 2000, en particulier supérieur à 5000.

4. Procédé selon l'une quelconque des revendications 1 à 3, dans lequel le nombre de Reynolds dans la cellule est inférieur à 100 000.

5. Procédé selon l'une quelconque des revendications 1 à 4, dans lequel la densité de courant moyenne est de 10 à 5000 A/m², en particulier de 10 à 1000 A/m², mieux encore de 25 à 750 A/m².

6. Procédé selon l'une quelconque des revendications 1 à 5, dans lequel la cathode présente une surtension de formation d'hydrogène supérieure à 300 mV, en particulier supérieure à 500 mV.

7. Procédé selon l'une quelconque des revendications 1 à 6, dans lequel l'anode présente une surtension de formation d'oxygène supérieure à 400 mV, en particulier supérieure à 700 mV.

8. Procédé selon l'une quelconque des revendications 1 à 7, dans lequel les dépôts de calamine sont retirés par le biais d'une opération à charge inversée.

9. Cellule électrolytique comprenant une entrée (1) à travers laquelle passe un courant d'eau, comprenant au moins une paire d'électrodes définissant une zone d'électrolyse, ladite paire d'électrodes comprenant une anode (2) et une cathode (3), aménagées sensiblement parallèlement sans moyen séparateur entre elles, dans laquelle la distance entre l'anode (2) et la cathode (3) de la paire d'électrodes est de 0,2 à 10 mm et où l'angle formé entre l'anode (2) et la cathode (3) est de 0° à 45°, ce qui permet un débit élevé d'électrolyte aux bornes desdites anode (2) et cathode (3), aménagées de sorte que ledit courant d'eau entrant s'écoule sensiblement perpendiculairement, à angle droit ou selon un angle dévié jusqu'à 60° par rapport audit écoulement à angle droit à travers la paire d'électrodes pour permettre le traitement d'un courant d'eau contenant des micro-organismes ayant une conductivité de 0,0001 à 100 S/m passant par ladite parie d'électrodes, lesdites anode (2) et cathode (3) se présentant sous la forme d'un treillis, ladite ou lesdites paires d'électrodes étant aménagées sur toute la surface en section transversale de la cellule, ladite cellule électrolytique comprenant en outre un moyen pour imposer une tension aux bornes desdites anode (2) et cathode (3) et un moyen pour délivrer un courant continu à ladite cellule et où la paire d'électrodes est aménagée de sorte qu'un courant d'eau pénétrant dans la cellule rencontre d'abord l'anode (2), puis la cathode (3), ladite cellule comprenant en outre une sortie (4).

10. Cellule selon la revendication 9, dans laquelle l'angle formé entre l'anode (2) et la cathode (3) se situe dans la plage de 0° à 30°, en particulier de 0° à 10°.

11. Cellule selon la revendication 9 ou 10, dans laquelle la surface en section transversale ouverte de l'anode (2) et de la cathode (3) représente 20 à 75 % de la surface en section transversale totale, en particulier 25 à 60 %.

12. Cellule selon l'une quelconque des revendications 9 à 11, dans laquelle l'anode (2) et la cathode (3) comprennent des ouvertures ayant une surface de 0,01 à 2500 mm².

13. Cellule selon l'une quelconque des revendications 9 à 12, dans laquelle la cellule comprend des électrodes unipolaires.

14. Cellule selon l'une quelconque des revendications 9 à 13, dans laquelle la distance entre l'anode (2) et la cathode (3) de la paire d'électrodes se situe dans la plage de 0,2 à 5 mm, en particulier de 0,2 à 3 mm.

15. Cellule selon l'une quelconque des revendications 9 à 14, dans laquelle la distance entre deux paires d'électrodes adjacentes représente 3 à 25 fois la distance entre l'anode (2) et la cathode (3) de chaque paire d'électrodes, en particulier 5 à 15 fois la distance entre l'anode (2) et la cathode (3) de chaque paire d'électrodes, en particulier une distance de 0,6 à 250 mm, mieux encore de 1 à 150 mm.

16. Cellule selon l'une quelconque des revendications 9 à 15, dans laquelle ladite cellule comprend un nombre de paires d'électrodes allant de 1 à 10, en particulier de 1 à 7, mieux encore de 2 à 5.

17. Utilisation de la cellule électrolytique selon l'une quelconque des revendications 9 à 16 pour traiter de l'eau contaminée contenant des micro-organismes.
